# EUROPÄISCHE PATENTSCHRIFT

(11) **EP 0 872 500 B1**
(45) Veröffentlichungstag und Bekanntmachung des Hinweises auf die Patenterteilung: **10.12.2003**
(21) Anmeldenummer: 98105909.0
(22) Anmeldetag: 01.04.1998
(51) Int. Cl.: C08G 18/38, C08G 18/80, C08J 7/04

(54) **Blockierte Isocyanatgruppen aufweisende kolloidale Metalloxide**
Colloidal metal oxides having blocked isocyanate groups
Oxydes de métal colloidals contenant des groupes isocyanate bloqués

(30) Priorität: 14.04.1997 DE 19715426
(43) Veröffentlichungstag der Anmeldung: 21.10.1998
(73) Patentinhaber: BAYER AG, 51368 Leverkusen (DE)
(72) Erfinder: Groth, Stefan, Dr., 51373 Leverkusen (DE); Kobusch, Claus, Dr., 40667 Meerbusch (DE); Schmalstieg, Lutz, Dr., 50676 Köln (DE); Puppe, Lothar, Dr., 51399 Burscheid (DE); Engbert, Theodor, Dr., 50968 Köln (DE); Bock, Manfred, Dr., 51375 Leverkusen (DE); Jonschker, Gerhard, 66583 Spiesen-Elversberg (DE)

(56) Entgegenhaltungen:
- US-A- 4 153 764
- US-A- 5 081 200

## Beschreibung

Die Erfindung betrifft blockierte Isocyanatgruppen aufweisende kolloidale Metalloxide und deren Verwendung zur Herstellung von kratzfesten Beschichtungen auf beliebigen Substraten.

Es besteht ein großer Bedarf an Kratzfestbeschichtungen für empfindliche Oberflächen. Insbesondere Thermoplaste, die sich durch hohe Schlagzähigkeit, Transparenz und Dimensionsstabilität auszeichnen, besitzen oft nur eine geringe Verkratzungsbeständigkeit und Chemikalienresistenz.

Zur Verbesserung der Kratzfestigkeit bei Thermoplasten werden vor allem thermisch aushärtende Silikonlacke eingesetzt, die vorzugsweise durch Kondensationsreaktion zu Si-O-Si-Verknüpfungen vernetzen. Parallel dazu können auch andere Vernetzungsmechanismen ablaufen. Solche Lacksysteme basieren oft auf partiellen Hydrolyse-Kondensationsprodukten von Alkyl- oder Aryltrialkoxysilan, die für gewöhnlich mit kolloidalen Kieselsolen kombiniert werden. Derartige Lacksysteme sind z.B. beschrieben in den US-Patenten 3 790 527, 3 887 514, 4 243 720, 4 278 804, 4 419 405, 4 624 870, 4 680 232, 4 006 271, 4 476 281, in den DE-A 4 011 045, 4 122 743, 4 020 316, 3 917 535, 3 706 714, 3 407 087, 3 836 815, 2 914 427, 3 135 241, 3 134 777, 3 100 532, 3 151 350, in den DE-A 3 005 541, 3 014 411, 2 834 606, 2 947 879, 3 016 021.

Diese Lacke besitzen oft nur eine geringe Elastizität, die nur dünne Schichtenstärken im Bereich von unter 10 µm zuläßt. Zudem bedingt der geringe organische Anteil eine schlechte Haftung, die in den meisten Fällen den Auftrag eines Primers erfordert, sowie Unverträglichkeiten mit organischen Bindemitteln. Desweiteren ist vielfach eine lange Einbrenndauer für die Kondensationsvernetzung erforderlich, die je nach Temperaturempfindlichkeit des Substrats mehrere Stunden erfordern kann.

Aufgabe war es nun, ein elastisches Kratzfest-Beschichtungssystem zu entwickeln, das in hohen Schichtstärken applizierbar ist und ohne Primer eine gute Substrathaftung aufweist, ohne Einbußen in bezug auf andere Eigenschaften wie Kratzfestigkeit und Chemikalienbeständigkeit hinnehmen zu müssen.

Es wurde nun überraschend gefunden, daß blockierte Isocyanatgruppen aufweisende kolloidale Metalloxide für Kratzfest-Beschichtungen verwendet werden können und ohne Primer Hartüberzüge mit hoher Chemikalienresistenz und hervorragender Substrathaftung liefern. Die. Applikation kann nach den für blockierte Isocyanate üblichen Einbrenntechniken erfolgen.

Gegenstand der Erfindung sind blockierte Isocyanatgruppen aufweisende kolloidale Metalloxide, erhältich durch Umsetzung von
A) blockierte Isocyanatgruppen-haltigen Silanen der Formel (I)

   XYZSi-(CH₂)ₙ-NR-CO-NH-Q (I),

   worin
   - R: für einen organischen Rest mit 1 bis 40 C-Atomen oder Wasserstoff steht,
   - XYZ: für gleiche oder verschiedene, unterhalb 100°C gegenüber Isocyanatgruppen inerte organische Reste mit 1 bis 30 C-Atomen stehen, mit der Maßgabe, daß mindestens einer dieser Reste für eine C₁-C₄-Alkoxygruppe steht, und
   - n: für die Zahl 2, 3 oder 4 steht und
   - Q: für einen organischen Rest steht, der mindestens eine, mit einem Blockierungsmittel umgesetzte, Isocyanatgruppe aufweist, mit
B) kolloidalen Metalloxiden ausgewählt aus der Gruppe Al, Si, Ti, Ta, W, Hf, Zr, Sn und Y.

Erfindungsgemäß bevorzugt eingesetzt werden Verbindungen der Formel (I), in denen
- R: für einen linearen oder verzweigten C₁-C₂₀-Alkylrest steht,
die eine geringere Tendenz zur Kristallisation aufweisen. Ganz besonders bevorzugt eingesetzt werden Verbindungen der Formel (I), in denen
- R: für -CH(COOR¹)CH₂COOR² steht und
- R¹ und R²: gleiche oder verschiedene C₁-C₁₈-Alkyl und C₆-C₁₄-Aryl-Alkyl, unterhalb 100°C gegenüber Isocyanat inerte organische Reste darstellen.

Diese Verbindungen besitzen eine geringe Neigung zur Kristallisation und haben den Vorteil, daß die Herstellung ohne Lösungsmittel gut kontrollierbar möglich ist. Man geht vorzugsweise hierbei von Polyisocyanaten und Asparaginsäureestern der Formel (II)

XYZSi-(CH₂)ₙ-NH-CH(COOR¹)CH₂COOR² (II),

aus, in denen
- R¹ und R² und n: die angegebene Bedeutung haben.

Deren Synthese ist z.B. in der EP-AS 596 360 beschrieben ist. Je nach Reaktionstemperatur kann es auch unter Abspaltung von Alkohol zur Hydantoinbildung kommen, wie sie z.B. in der US-A 3 549 599 beschrieben ist.

Ein weiterer Gegenstand der Erfindung ist die Verwendung des erfindungsgemäßen modifizierten Metalloxids als Komponente oder Zwischenprodukt zur Herstellung von gegebenenfalls geschäumten Polyurethankunststoffen, Lacken oder Beschichtungsmitteln. Das erfindungsgemäße kolloidale Metalloxid kann z.B. als Härter gegenüber Isocyanat-reaktiven Komponenten alleine oder anteilig eingesetzt werden.

Als Bestandteil des erfindungsgemäßen Beschichtungssystems werden kolloidale Metalloxide eingesetzt. Der Begriff kolloidales Metalloxid im Sinne der Erfindung soll eine weite Vielfalt fein verteilter Oxide der Elemente Aluminium, Silicium, Titan, Zirkonium, Tantal, Wolfram, Hafnium, Zinn und Yttrium in beliebigen Lösungsmitteln einschließen.

Bevorzugt eingesetzt wird kolloidales Siliciumoxid. Hierbei handelt es sich im allgemeinen um eine Dispersion von Siliciumdioxid (SiO₂)-Teilchen von Submikrongröße in einem wässrigen oder anderen Lösungsmittel. Kolloidales Siliciumoxid ist in verschiedenen Formen erhältlich. Besonders bevorzugt eingesetzt werden organische Lösungen von kolloidalen Kieselsolen. Hierbei handelt es sich in der Regel um eine 30-40 %ige Lösung von kolloidalem Siliciumoxid in Isopropanol mit einem Wassergehalt von <1 % und einer mittleren Teilchengröße von 10-12 nm.

Auch wässrige Lösung von kolloidalem Siliciumoxid können Verwendung finden. Für die Zwecke der vorliegende Erfindung werden saure Formen (d.h. Dispersionen mit geringen Natriumgehalt) bevorzugt eingesetzt. Alkalisches kolloidales Siliciumoxid kann durch Ansäuern in saures kolloidales Siliciumoxid umgewandelt werden. Ein gut geeignetes wässriges saures kolloidales Siliciumoxid ist beispielsweise Nalcoag 1034A®, erhältlich von der Nalco Chemical Company, Chicago 111®. Nalcoag 1034A® ist eine hochreine wässrige, saure Dispersion von kolloidalem Siliciumoxid mit geringem Na-Gehalt, einem pH-Wert von 3,1 und einem SiO2-Gehalt von 34 Gew.-%.Von vergleichbarer Qualität und ebenso geignet ist die Dispersion LUDOX TMA® der Firma DuPont, die ebenfalls einen pH-Wert von 3,1 aufweist und 34 Gew.-% SiO₂ enthält.

Blockierte Isocyanatgruppen-haltige Silane der Formel (I) werden hergestellt durch Umsetzung von aminofunktionellen Alkoxysilylverbindungen der Formel (III)

XYZSi-(CH₂)ₙ-NHR (III)

wobei
- n: für die Zahl 2, 3 oder 4, vorzugsweise 3, steht und
- R: für Wasserstoff oder vorzugsweise einen linearen oder verzweigten Alkylrest mit 1 bis 4 Kohlenstoffatomen steht.

Beispiele für einsetzbare aminofunktionelle Alkoxysilylverbindungen sind 3-Aminopropyltrimethoxysilan, Aminopropyltriethoxysilan oder 3-Aminopropyl-methyl-diethoxysilan. Beispiele für bevorzugt einsetzbare Alkoxysilylverbindungen mit sekundären Aminofunktionen sind N-Methyl-3-aminopropyltrimethoxysilan, N-Butyl-3-aminopropyltrimethoxysilan oder N-Phenyl-3-aminopropyltrimethoxysilan.

Erfindungsgemäß besonders bevorzugt einzusetzende aminofunktionelle Alkoxysilylverbindungen sind die in der EP-A 596 360 beschriebenen Asparaginsäureester der Formel (II):

XYZSi-(CH₂)ₙ-NH-CH(COOR¹)CH₂COOR² (II),

worin
- R¹ und R²: für gleiche oder verschiedene, unterhalb 100°C gegenüber, Isocyanatgruppen inerte organische Reste, vorzugsweise gleiche oder verschiedene Alkylreste mit 1 bis 4 Kohlenstoffatomen, besonders bevorzugt jeweils für Methylreste oder jeweils Ethylreste, stehen,
- X: vorzugsweise für eine Alkoxygruppe mit 1 bis 4 Kohlenstoffatomen, besonders bevorzugt Methoxy oder Ethoxy, steht,
- Y und Z: vorzugsweise für gleiche oder verschiedene Reste stehen und Alkyl- oder Alkoxygruppen mit 1 bis 4 Kohlenstoffatomen, besonders bevorzugt für Methoxy oder Ethoxy, so daß X = Y = Z ist, bedeuten und
- n: steht für 2 oder 3 oder 4, vorzugsweise für 3.

Diese Verbindungen stellen Verbindungsglieder zwischen dem anorganischen Teil und dem Polyurethanteil dar, da die Umsetzung mit Isocyanaten in gut kontrollierbarer Reaktion erlauben, ohne daß, wie z.B. im Falle der Aminosilane, unlösliche Harnstoffe gebildet werden. Je nach Reaktionsführung kann es, wie in der US-A 3 549 599 beschrieben, zur Hydantoinbildung unter Abspaltung von Alkohol kommen.

Beispiel für derartige Verbindungen sind N-(3-Trimethoxysilylpropyl)asparaginsäurediethylester, N-(3-Triethoxysilylpropyl)asparaginsäurediethylester, N-(3-Trimethoxysilylpropyl)asparaginsäuredimethylester, N-(3-Triethoxysilylpropyl)asparaginsäuredimethylester, N-(3-Trimethoxysilylpropyl)asparaginsäuredibutylester, N-(3-Triethoxysilylpropyl)asparaginsäuredibutylester, wovon N-(3-Trimethoxysilylpropyl)asparaginsäuredimethylester, N-(3-Triethoxysilylpropyl)asparaginsäuredimethylester, N-(3-Trimethoxysilylpropyl)asparaginsäurediethylester und N-(3-Triethoxysilylpropyl)asparaginsäurediethylester bevorzugt sind.

Als weitere Komponenten können hydrolysierbare Silane mitverwendet werden. Bevorzugt sind Silane der Formel (IV)

SiXₙR¹ ₄₋ₙ (IV),

in der die Gruppen X, die gleich oder verschieden sein können, Wasserstoff, Halogen, C₁-C₄-Alkoxy, -Acyloxy, -Alkylcarbonyl, -Alkoxycarbonyl, oder NR²₂ (R² = H und oder C₁-C₄-Alkyl) bedeuten und die
Reste R¹, die gleich oder verschieden sein können, Wasserstoff, C₁-C₄-Alkyl, C₂-C₆-Alkenyl, C₂-C₆-Alkinyl, C₆-C₂₄-Aryl, C₇-C₃₀-Arylalkyl, C₈-C₃₀-Arylalkenyl, -Alkenylaryl, -Arylalkinyl oder -Alkinylaryl darstellen,
wobei diese Reste durch O- oder S-Atome oder die Gruppe -NR² unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy-, oder Vinylgruppen tragen können und m den Wert 1,2 oder 3 hat, und/oder einem davon abgeleiteten Oligomeren, in einer Menge von 25 bis 95 Mol-%, bezogen auf die Gesamtmolzahl der (monomeren) Ausgangskomponente.

Beispiel für solche Silane sind Tetramethoxysilan, Tetraethoxysilan, Methyltrichlorsilan, Methyltrimethoxysilan, Methyltriethoxysilan, Ethyltrichlorsilan, Ethyltriethoxysilan, Isobutyltrimethoxysilan, Octyltrimethoxysilan, Octyltriethoxysilan, Octadecyltrimethoxysilan, Vinyltriethoxysilan, Vinyl-tris(2-methoxyethoxy)silan, Vinyltrichlorsilan, Allyltrimethoxysilan, Allyltriethoxysilan, Propyltrimethoxysilan, Phenyltrimethoxysilan, Phenyltriethoxysilan, Dimethyldichlorsilan, Dimethyldimethoxysilan, Dimethyldiethoxysilan, Diphenyldichlorsilan, Diphenyldichlorsilan, Diphenyldimethoxysilan, Diphenyldiethoxysilan, t-Butyldimethylchlorsilan, Allyldimethylchlorsilan, 3-Chlorpropyl-trimethoxysilan, 3-Cyanopropyl-trimethoxysilan, Methacrylsäure-[3-(trimethoxysilyl)-propylester], 3-[2,3-Epoxy-propoxy)-propyl]-trimethoxysilan, 3-[2,3-Epoxy-propoxy)-propyl]-triethoxysilan, 3-Aminopropyl-trimethoxysilan, 3-Aminopropyl-triethoxysilan, 3-Aminopropyl-methyldiethoxysilan, 3-Aminopropyl-methyldimethoxysilan, N-[3-(Trimethoxysilyl)-propyl]-ethylendiamin, 1N-[3-(Trimethoxysilyl)-propyl]-diethylentriamin, [2-(3,4-Epoxycyclohexyl)-ethyl]-trimethoxysilan, N-(3-Trimethoxysilyl-propyl)-anilin, Bis(3-trimethoxysilyl-propyl)amin, 3-Mercaptopropyl-trimethoxysilan, N-(3-Trimethoxysilyl-propyl)-harnstoff.

Diese Silane sind zum Teil Handelsprodukte und lassen sich nach bekannten Methoden herstellen. vgl. W. Noll, "Chemie und Technologie der Silicone", Verlag Chemie GmbH, Weinheim/Bergstraße (1968).

Weitere Aufbaukomponenten sind beliebige Isocyanatgruppen enthaltende Verbindungen.
Bevorzugt sind die an sich bekannten Diisocyanate wie sie z.B. in "Methoden der organischen Chemie" (Houben-Weyl), Bd. 14/2, Georg Thieme Verlag, Stuttgart 1963, Seiten 61 bis 70 und von W. Siefken in Liebigs Annalen der Chemie 562, Seiten 75 bis 136 beschrieben sind.

Erfindungsgemäß bevorzugt einzusetzende Diisocyanate sind 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (IMCI), 1,3-Diisocyanato-4-methylcyclohexan, 1,3-Diisocyanato-2-methyl-cyclohexan, α,α,α',α'-Tetramethyl-m- oder - p-xylylen-diisocyanat (TMXDI) sowie aus diesen Verbindungen bestehende Gemische, die technisch leicht zugänglichen Diisocyanate wie 2,4- und 2,6-Diisocyanatotoluol oder 4,4'- und gegebenenfalls 2,4'-Diisocyanatodiphenylmethan, 3,4'-Diisocyanato-4-methyl-diphenylmethan sowie deren Isomeren oder Gemische dieser Isomeren. Eingesetzt werden können durch Alkylsubstituenten sterisch gehinderte Phenylendiisocyanate wie z. B. 1-Methyl -3,5-diethyl-2,4-diisocyanatobenzol, 1-Methyl-3,5-diethyl-2,6-diisocyanatobenzol, sowie beliebige Gemische dieser beiden Diisocyanate, 1,3,5-Triisopropyl-2,4-diisocyanatobenzol oder alkylsubstituierte Phenylendiisocyanate der beispielsweise in US-A 3 105 845 oder DE-A 3 317 649 beschriebenen Art.

Besonders bevorzugt einzusetzende Diisocyante sind 4,4'-Diisocyanatodicyclohexylmethan, 3-Isocyanatomethy-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'dimethyl-dicyclohexylmethan, 4,4'-Diisocyanatodicyclohexylpropan-(2,2), 3-, bzw. 4-Isocyanatomethyl-1-methyl-1-isocyanatocyclohexan (IMCI), 4-Isocyanatomethyl-1,8-diisocyanatooktan, 1,3-Diisocyanato-4-methyl-cyclohexan, 1,3-Diisocyanato-2-methyl-cyclohexan, α,α,α',α'-Tetramethyl-m- oder -p-xylylen-diisocyanat (TMXDI) sowie aus diesen Verbindungen bestehende Gemische. Ganz besonders bevorzugt ist Hexamethylendiisocyanat (HDI).

Es ist auch möglich, verschiedene aus den oben genannten Diisocyanaten zugängliche Polyisocyanate, wie sie z. B in J. prakt. Chem. **1994**, 336, 185-200 beschrieben sind, einzusetzen oder mitzuverwenden.

Weitere gegebenfalls mitzuverwendende Aufbaukomponenten sind beliebige, in der Polyurethanchemie übliche, gegenüber Isocyanatgruppen reaktive Verbindungen, wie z.B. Polyesterpolyole, Polycarbonat- oder Polyetherpolyole oder auch niedermolekulare Diole wie z.B. Ethylenglykol, Propylenglykol, 1,4- und 1,3-Butandiol, 1,6-Hexandiol, 1,8-Octandiol, Neopentylglykol, 2-Methyl-1,3-dihydroxypropan, Glycerin, Trimethylolpropan, Diethylenglykol, Triethylenglykol, Tetraethylenglykol, Polyethylenglykol des genannten Molekulargewichtsbereichs, Dipropylenglykol, Tripropylenglykol oder beliebige Gemische derartiger Alkohole.

Erfindungswesentlich ist die Mitverwendung von Blockierungsmitteln. Durch diesen Schritt werden Isocyanatgruppen, die später für die Vernetzungsreaktion gebraucht werden, vor den gegenüber Isocyanat reaktiven Lösungsmedien geschützt.

Geeignete Blockierungsmittel sind insbesondere Verbindungen mit vorzugsweise einer gegenüber Isocyanat reaktionsfähigen Gruppe, die mit organischen Isocyanaten eine Additionsreaktion eingehen. Geeignete derartige Blockierungsmittel sind z.B. sekundäre oder tertiäre Alkohole, wie Isopropanol oder t-Butanol, CH-acide Verbindungen, wie z.B. Malonsäurediethylester, Acetylaceton, Acetessigsäureethylester, Oxime, wie z.B. Formaldoxim, Acetaldoxim, Methylethylketoxim, Cyclohexanonoxim, Acetophenonoxim, Berzophenonoxim, oder Diethylenglyoxim, Lactame, wie z. B. Caprolactam, Valerolactam, Butyrolactam, Phenole wie Phenol, o-Methylphenol, N-Alkylamide, wie z.B. N-Methylacetamid, Imide, wie Phthalimid, sekundäre Amine, wie z.B. Diisopropylamin, Imidazol, Pyrazol, 3,5-Dimethylpyrazol, 1,2,4-Triazol und 2,5-Dimethyl-1,2,4-triazol, Vorzugsweise werden erfindungsgemäß Blockierungsmittel wie Butanonoxim, 3,5-Dimethylpyrazol, Caprolactam, Malonsäurediethylester, Malonsäuredimethylester, Acetessigester, 1,2,4-Triazol und Imidazol eingesetzt. Besonders bevorzugt werden Blockierungsmittel verwendet, die eine niedrige Einbrenntemperatur ermöglichen wie z.B., Malonsäurediethylester, Malonsäuredimethylester, Butanonoxim und 3,5-Dimethylpyrazol, das außerdem eine geringere Vergilbung bedingt.

Die Herstellung kann nach verschiedenen Varianten erfolgen. Die bevorzugte Variante ist die Umsetzung eines Alkoxysilyl-funktionellen Prepolymers mit dem kolloidalen Metalloxid in alkoholischer Lösung unter Zusatz von Wasser und gegebenenfalls Katalysatoren. Hierbei wird zunächst ein Prepolymer aus einem Polyisocyanat oder einer Polyisocyanat-Mischung, dem Alkoxysilyl-funktionellen Amin und einem Blockierungsmittel sowie gegenfalls mitzuverwendende Kettenverlängerer der oben genannten Art hergestellt. Die Herstellung kann durch Zugabe des Blockierungsmittels und des Alkoxysilyl-funktionellen Amin zum gegebenenfalls vorverlängerten Polyisocyanat erfolgen. Derart, daß zunächst 0,1 bis 0,9 NCO-Äquivalente, bevorzugt 0,3 bis 0,7 NCO-Äquivalente, mit einem Blockierungsmittel bei 0 bis 100°C, bevorzugt bei 20 bis 70°C, umgesetzt werden und anschließend die restlichen NCO-Gruppen bei 0 bis 80°C, bevorzugt bei 20 bis 70°C, mit dem Alkoxysilyl-funktionellen Amin abgesättigt werden. Selbstverständlich ist es auch möglich das gegebenenfalls mit Polyolen vorverlängerten Polyisocyanat zuerst mit dem Alkoxysilyl-funktionellen Amin und anschließend mit dem Blockierungsmittel umzusetzen. Ebenso ist auch die Umsetzung mit einem Gemisch der beiden Komponenten möglich. Es können beliebige Lösungsmittel mitverwendet werden. Die Verwendung von Alkoxysilylfunktionellen Asparaginsäureestern erweist sich bei der Herstellung als großer Vorteil, da die Reaktion insbesondere bei Verzicht auf Lösungsmittel unter gut kontrollierbaren Bedingungen abläuft. Vorallem bei höheren Temperaturen, die in der Regel bei über 60°C liegen, kann es hierbei zur Hydantoinbildung kommen, die in bestimmten Fällen von Vorteil sein kann.

Die Herstellung des modifizierten kolloidalen Metalloxids kann durch Vermischen des oben genannten Prepolymers mit dem gelösten kolloidalen Metalloxid und gegebenenfalls dem Silan erfolgen. Wird ein organisch gelöstes Metalloxid verwendet, so muß zumindest soviel Wasser zugegen sein, daß die Hydrolyse der Alkoxysilylgruppen erfolgen kann. Werden wässrige kolloidale Metalloxidlösungen eingesetzt, so müssen zumindest soviel organische Lösemittel zugesetzt werden, daß sich das Prepolymer lösen kann. Es hat sich im Rahmen der vorliegenden Erfindung gezeigt, daß zumindest 20 % eines sekundären Alkohols zugegen sein müssen, um eine Gelbildung zu vermeiden.

Gegebenfalls kann ein Katalysator zur Beschleunigung zugesetzt werden. bevorzugt ist hier der Zusatz von Säuren wie Salzsäure, Schwefelsäure oder Trifluoressigsäure. Zur Vervollständigung der Reaktion kann längere Zeit bei Raumtemperatur gerührt werden oder auch am Rückfluß erhitzt werden. Zur Erhöhung des Festkörpergehaltes können überschüssige Lösungsmittel und/oder Wasser durch Destillation entfernt werden.

Die so hergestellten Lösungen von blockierten Isocyanatgruppen enthaltenden kolloidalen Metalloxiden können zur Herstellung des Beschichtungsmittels mit beliebigen gegenüber Isocyanatgruppen reaktiven, mindestens difunktionellen Substanzen kombiniert werden. Das Verhältnis von blockierten Isocyantgruppen zu gegenüber Isocyanatgruppen reaktiven Gruppen wird üblicherweise zwischen 0,5 und 1,5, bevorzugt zwischen 0,8 und 1,2 gewählt. Selbstverständlich können die hier beschriebenen Härter auch als Zusatzmittel in beliebigen Formulierungen, die gegenüber Isocyanatgruppen reaktive Gruppen enthalten, mitverwendet werden.

Ein weiterer Gegenstand der Erfindung ist die Verwendung der blockierte Isocyanatgruppen aufweisenden kolloidalen Metalloxide als kratzfeste Beschichtungsmittel für beliebige Substrate.

Die erhaltenen Beschichtungsmittel können zur Beschichtung von beliebigen Substraten zur Verbesserung der Kratzfestigkeiten, Abriebbeständigkeiten oder Chemikalienbeständigkeiten verwendet werden. Bevorzugte Substrate sind thermoplastische Kunststoffe wie Polycarbonat, Polybutylentherephthalat, Polymethylmethacrylat, Polystyrol der Polyvinylchlorid, besonders bevorzugt ist Polycarbonat. Das Aufbringen des Beschichtungsmittels kann durch beliebige Verfahren wie Eintauch-, Sprüh-, und Gießverfahren erfolgen. Die Aushärtung erfolgt durch Erwärmen unter den für blockierte Isocyanate erforderlichen Bedingungen und kann selbstverständlich durch Zusatz geeigneter Katalysatoren beschleunigt werden.

### Beispiele

Herstellung der blockierte Isocyanatgruppen aufweisenden kolloidalen Metalloxide:

### Beispiel 1

Es werden 84 g (0,5 mol) Hexamethylendiisocyanat vorgelegt und zunächst mit 48 g (0,5 mol) 3,5-Dimethylpyrazol umgesetzt. Anschließend werden 176 g (0,5 mol) N-(3-Trimethoxysilylpropyl)-asparaginsäurediethylester (hergestellt gemäß EP 596 360, Beispiel 5) bei 50°C zugetropft. Zu dem 50°C warmen Prepolymer werden 2 050 g Organosol (Bayer AG, 29,3 %ige kolloidale Lösung von Siliciumoxid in Isopropanol) gegeben und auf Raumtemperatur abgekühlt. Es werden 20 g Wasser zugegeben, mit Trifluoressigsäure ein pH-Wert von 3,1 eingestellt und 48 Stunden bei Raumtemperatur gerührt. Schließlich werden zum partiellen Austausch des Isopropanols gegen ein höher siedendes Lösungsmittel 457 g Methoxypropylacetat zugegeben und durch Abdestillieren im Vakuum bei 40°C und 70 mbar ein Festkörpergehalt von 56 % eingestellt. Die Lösung dieses modifizierten kolloidalen Metalloxids weist einen blockierten Isocyanatgehalt von 1,29 % auf.

### Beispiel 2

Es werden 84 g (0,5 mol) Hexamethylendiisocyanat vorgelegt und zunächst mit 48 g (0,5 mol) 3,5-Dimethylpyrazol umgesetzt. Anschließend werden 176 g (0,5 mol) N-(3-Trimethoxysilylpropyl)-asparaginsäurediethylester bei 50°C zugetropft. Zu dem 50°C warmen Prepolymer werden 2 050 g Organosol (Bayer AG, 29,3 %ige kolloidale Lösung von Siliciumoxid in Isopropanol) gegeben und auf Raumtemperatur abgekühlt. Es werden 20 g Wasser zugegeben, mit Trifluoressigsäure ein pH-Wert von 3,1 eingestellt und 48 Stunden bei Raumtemperatur gerührt. Anschließend wird Isopropanol bei 70 mbar bis zu einem Festkörpergehalt von 53 % abdestilliert. Die Lösung weist einen blockierten Isocyanatgehalt von 1,23 % auf.

### Beispiel 3

Es werden 84 g (0,5 mol) Hexamethylendiisocyanat vorgelegt und zunächst mit 48 g (0,5 mol) 3,5-Dimethylpyrazol umgesetzt. Anschließend werden 176 g (0,5 mol) N-(3-Trimethoxysilylpropyl)-asparaginsäurediethylester bei 50°C zugetropft. Zu dem 50°C warmen Prepolymer werden 2 563 g Organosol (Bayer AG, 29,3 %ige kolloidale Lösung von Siliciumoxid in Isopropanol) gegeben und auf Raumtemperatur abgekühlt. Es werden 20 g Wasser zugegeben, mit Trifluoressigsäure ein pH-Wert von 3,1 eingestellt und 48 Stunden bei Raumtemperatur gerührt. Anschließend wird Isopropanol bei 70 mbar bis zu einem Festkörpergehalt von 55 % abdestilliert. Die Lösung weist einen blockierten Isocyanatgehalt von 1,03 % auf.

### Beispiel 4

Es werden 111 g (0,5 mol) 3-Isocyanatomethyl-3,3,5-trimethylcyclohexylisocyanat (Isophorondiisocyanat = IPDI) vorgelegt und zunächst mit 48 g (0,5 mol) 3,5-Dimethylpyrazol umgesetzt. Anschließend werden 176 g (0,5 mol) N-(3-Trimethoxysilylpropyl)-asparaginsäurediethylester bei 50°C zugetropft. Zu dem 50°C warmen Prepolymer werden 2 050 g Organosol (Bayer AG, 29,3 %ige kolloidale Lösung von Siliciumoxid in Isopropanol) gegeben und auf Raumtemperatur abgekühlt. Es werden 20 g Wasser zugegeben, mit Trifluoressigsäure ein pH-Wert von 3,1 eingestellt und 48 Stunden bei Raumtemperatur gerührt. Anschließend wird Isopropanol bei 70 mbar bis zu einem Festkörpergehalt von 55 % abdestilliert. Die Lösung weist einen blockierten Isocyanatgehalt von 1,23 % auf.

### Anwendungsbeispiele

### Beispiel 5

Zu 325 g des blockierten Isocyanats aus Beispiel 1 werden 20 g eines auf 1,6-Hexandiol gestarteten Caprolactonpolyesters mit einem mittleren Molgewicht von 400 d, 72 g Aceton sowie 1,7 g Dibutylzinndilaurat und 0,1 % (bez. auf Festkörper) Verlaufsmittel Baysilone® OL 17 (Handelsprodukt der Bayer AG) gegeben. Das Beschichtungsmittel wird durch Aufspritzen auf eine mit Isopropanol vorgereinigte Polycarbonatplatte (100 x 100 x 3 mm) in einer Naßfilmdicke von 50 µm aufgetragen. Die Schichtdicke des Kratzfestlackes beträgt 20 µm. Die Aushärtung erfolgt nach einer 30 minütigen Trocknung bei Raumtemperatur durch einstündiges Erhitzen auf 120°C.

### Beispiel 6

Zu 342 g des blockierten Isocyanats aus Beispiel 2 werden 20 g eines auf 1,6-Hexandiol gestarteten Caprolactonpolyesters mit einem mittleren Molgewicht von 400 d, sowie 1,8 g Dibutylzinndilaurat und 0,1 % (bez. auf Festkörper) Baysilone® OL 17 gegeben. Das Beschichtungsmittel wird durch Anfspritzen auf eine mit Isopropanol vorgereinigte Polycarbonatplatte (100 x 100 x 3 mm) in einer Naßfilmdicke von 60 µm aufgetragen. Die Schichtdicke des Kratzfestlackes beträgt 30 µm. Die Aushärtung erfolgt nach einer 30 minütigen Trocknung bei Raumtemperatur durch sechsstündiges Erhitzen auf 120°C.

### Beispiel 7

Zu 409 g des blockierten Isocyanats aus Beispiel 1 werden 20 g eines auf 1,6-Hexandiol gestarteten Caprolactonpolyesters mit einem mittleren Molgewicht von 400 d, 92 g Aceton sowie 2,1 g Dibutylzinndilaurat und 0,1% (bez. auf Festkörper) Baysilone® OL 17 gegeben. Das Beschichtungsmittel wird durch Aufspritzen auf eine mit Isopropanol vorgereinigte Polycarbonatplatte (100 x 100 x 3 mm) in einer Naßfilmdicke von 50 µm aufgetragen. Die Schichtdicke des Kratzfestlackes beträgt 20 µm. Die Aushärtung erfolgt nach einer 30 minütigen Trocknung bei Raumtemperatur durch einstündiges Erhitzen auf 120°C.

### Beispiel 8

Zu 341 g des blockierten Isocyanats aus Beispiel 1 werden 20 g eines auf 1,6-Hexandiol gestarteten Caprolactonpolyesters mit einem mittleren Molgewicht von 400 d, 75 g Aceton sowie 1,8 g Dibutylzinndilaurat und 0,1% (bez. auf Festkörper) Baysilone® OL 17 gegeben. Das Beschichtungsmittel wird durch Aufspritzen auf eine mit Isopropanol vorgereinigte Polycarbonatplatte (100 x 100 x 3 mm, Makrolon® der Bayer AG) in einer Naßfilmdicke von 130 µm aufgetragen. Die Schichtdicke des Kratzfestlackes beträgt 40 µm. Die Aushärtung erfolgt nach einer 30 minütigen Trocknung bei Raumtemperatur durch einstündiges Erhitzen auf 120°C.

### Ergebnisse:

| Beispiel | Trocknung RT/Einbrenndauer 120°C [min] | Schichtdicke µm | Kratzfestigkeit | Beständigkeit gegen Ethylacetat | Haftung nach Gitterschnitt 1x/4x | Pendelhärte nach König DIN 53157 |
|---|---|---|---|---|---|---|
| 5 | 30/60 | 20 | 1 | 0 | 0/0 | 223 |
| 6 | 30/360 | 30 | 2 | 0 | 0/0 | 192 |
| 7 | 30/60 | 20 | 1 | 0 | 0/0 | 130 |
| 8 | 30/60 | 40 | 2 | 0 | 0/0 | 206 |

Bewertung der Kratzfestigkeit nach dreimaligem Reiben mit einer Stahlwolleprobe der Feinheit (0000):
0 = keine Spuren,
1 = kaum Spuren,
2 = leicht angekratzt,
3 = mäßig angekratzt,
4 = stark angekratzt.

Ermittlung Chemikalienbeständigkeit nach Einwirkung von Ethylacetat:
0 = keine Spuren,
1 = zurückbleibende Ränder,
2 =schwer anritzbar,
3 = anritzbar,
4 = leicht gequollen,
5 = aufgequollen.

Ermittlung der Haftfestigkeit nach der Gitterschnittmethode in Anlehnung an DIN 53 151:
0 = keine Entlaminierung bis 5 = vollständige Entlaminierung.

## Patentansprüche

1. Blockierte Isocyanatgruppen aufweisende kolloidale Metalloxide, erhältlich durch Umsetzung von
A) blockierten Isocyanatgruppen-haltigen Silanen der Formel (I)
XYZSi-(CH₂)ₙ-NR-CO-NH-Q (I),
worin
R für einen organischen Rest mit 1 bis 40 C-Atomen oder Wasserstoff steht,
XYZ für gleiche oder verschiedene, unterhalb 100°C gegenüber Isocyanatgruppen inerte organische Reste mit 1 bis 30 C-Atomen stehen, mit der Maßgabe, daß mindestens einer dieser Reste für eine C₁-C₄-Alkoxygruppe steht, und
n für die Zahl 2, 3 oder 4 steht und
Q für einen organischen Rest steht, der mindestens eine, mit einem Blockierungsmittel umgesetzte, Isocyanatgruppe aufweist, mit
B) kolloidalen Metalloxiden ausgewählt aus der Gruppe Al, Si, Ti, Ta, Zr, W, Hf, Sn und Y.

2. Verwendung der blockierte Isocyanatgruppen aufweisenden kolloidalen Metalloxide gemäß Anspruch 1 als Reaktionspartner für gegenüber Isocyanat reaktiven Verbindungen zur Herstellung von Kratzfest-Beschichtungen von beliebigen Substraten.

3. Verwendung der blockierte Isocyanatgruppen aufweisenden kolloidalen Metalloxide gemäß Anspruch 1 als Reaktionspartner für gegenüber Isocyanat reaktiven Verbindungen zur Herstellung von Kratzfest-Beschichtungen von Thermoplasten.

4. Lacke, enthaltend blockierte Isocyanatgruppen aufweisende kolloidale Metalloxide nach Anspruch 1.

## Claims

1. Colloidal metal oxides having blocked isocyanate groups, obtainable by reacting
A) blocked isocyanate group-containing silanes of the formula (I)
XYZSi-(CH₂)ₙ-NR-CO-NH-Q (I)
in which
R represents an organic group with 1 to 40 carbon atoms, or hydrogen
XYZ represent identical or different organic groups with 1 to 30 carbon atoms which are inert towards isocyanate groups below 100°C, with the proviso that at least one of these groups is a C₁-C₄-alkoxy group, and
n is the number 2, 3 or 4, and
Q represents an organic group which has at least one isocyanate group which has reacted with a blocking agent, with
B) colloidal metal oxides selected from the group Al, Si, Ti, Ta, Zr, W, Hf, Sn and Y.

2. Use of colloidal metal oxides having blocked isocyanate groups according to Claim 1 as a reaction partner for isocyanate-reactive compounds to prepare scratch-resistant coatings on any substrates.

3. Use of colloidal metal oxides having blocked isocyanate groups according to Claim 1 as a reaction partner for isocyanate-reactive compounds to prepare scratch-resistant coatings on thermoplastic materials.

4. Lacquers containing colloidal metal oxides having blocked isocyanate groups according to Claim 1.

## Revendications

1. Oxydes métalliques colloïdaux contenant des groupes isocyanates bloqués et qu'on obtient en faisant réagir
A) des silanes contenant des groupes isocyanates bloqués et répondant à la formule (I)
XYZSi-(CH₂)ₙ-NR-CO-NH-Q (I)
dans laquelle
R représente un radical organique en C₁-C₄₀ ou l'hydrogène,
XYZ ayant des significations identiques ou différentes, représentent chacun un radical organique en C₁-C₃₀ inerte au-dessous de 100°C à l'égard des groupes isocyanates, au moins un de ces symboles représentant un groupe alcoxy en C₁-C₄,
n est égal à 2, 3 ou 4, et
Q représente un radical organique portant au moins un groupe isocyanate qui a réagi avec un agent bloquant,
avec
B) des oxydes métalliques colloïdaux choisis parmi les oxydes d'Al, de Si, de Ti, de Ta, de Zr, de W, de Hf, de Sn et de Y.

2. Utilisation des oxydes métalliques colloïdaux à groupes isocyanates bloqués selon la revendication 1 en tant que co-réactifs de composés réactifs avec les isocyanates en vue de l'application de revêtements résistants à l'éraflage sur des supports quelconques.

3. Utilisation des oxydes métalliques colloïdaux à groupes isocyanates bloqués selon la revendication 1 en tant que co-réactifs de composés réactifs avec les groupes isocyanates pour l'application de revêtements résistants à l'éraflage sur des matières thermoplastiques.

4. Vernis contenant des oxydes métalliques colloïdaux à groupes isocyanates bloqués selon la revendication 1.
